# EUROPEAN PATENT APPLICATION

(11) **EP 4 293 594 A1**
(43) Date of publication of application: **20.12.2023**
(21) Application number: 22180823.1
(22) Date of filing: 23.06.2022
(51) Int. Cl.: G06Q 30/02

(54) **INTERACTIVE TARGETED INFORMATION SYSTEM**

(30) Priority: 15.06.2022 PT 2022118042
(71) Applicant: NEXI TECHNOLOGIES, LDA, 4750-279 Barcelos (PT)
(72) Inventor: BESSA FALCÃO GOMES DE CASTRO, FRANCISCO ANTÓNIO, Porto (PT); FARIA NEIVA, JOÃO ANDRÉ DE, ESPOSENDE (PT)
(74) Representative: do Nascimento Gomes, Rui

(57) **Abstract**

The present application discloses an interactive targeted information system. The system includes at least one display unit (3) configured to display selected information, at least one data collection unit (1) configured to collect sensory data related with the display unit's surrounding environment and at least one dynamic content selection unit (2) for selecting information to be displayed based on at least the sensory data collected. The sensory data collected through the data collection units can include measuring and characterizing audience per location, mapping city areas and infrastructure deficiencies as well as registering weather considerations based on the day, time and location enabling streaming information based on that data.

## Description

### TECHNICAL FIELD

The present disclosure is enclosed in the area of information systems. More particularly, the present disclosure relates to systems and methods for displaying audio, visual and audio-visual contents such as advertising or other types of information.

### PRIOR ART

A traditional form of advertising is the billboard wherein a static image or message is displayed. More recently billboards have been improved to use monitor screens to display moving images or messages to the audience.

Mobile advertising and marketing devices, which are usually applicable in vehicles' rooftop, are mainly static and randomly target any audience. The patent application US 2012323648 A1 discloses an advertising system for mounting on a vehicle, wherein the advertising system forms an actuated billboard displaying an advertising message on a vehicle. The system is connected to a GPS signal transmitter, GPS receiver/locator and a microprocessor in order to display images based on the location of vehicle. However, the system has very limited interoperability with other modern computer systems and all of advertising messages must be pre-loaded into the microprocessor and are stored within the microprocessor.

In its turn, patent application WO 2006136109 A1 discloses a vehicle-based content display system, where the information to be displayed is selected according to a particular location. The system comprises a plurality of vehicles randomly mobile throughout a broad area formed by subsets of local areas cells, each vehicle having an outdoor content display panel for displaying location-based advertisement. The system also comprises a control centre for receiving and processing location information including data identifying target vehicles in a particular cell, and processing/transmission means for wirelessly transmitting said information to only those vehicles in said particular cell for display on the display panel immediately.

However, basing the selection of information to be displayed solely on the geographic location is insufficient to guarantee an effective impact of this information on the target audience. Not only because the information selection process does not include other defining variables of the environment surrounding the exhibition site, but also because said selection process does not consider the dynamism associated with each site, in terms of audience, age groups, time of day, or weather conditions for example.

In fact, all the existing solutions have the issue of being limited to one main function that is the display of a selected information, not using its surrounding environment for other purposes such as data collection, and therefore not using it as a decision factor in the selection of the information to be displayed.

### PROBLEM TO BE SOLVED

The use of a conventional display devices, that can be installed either on a billboard structure or on a vehicle's rooftop carries several inefficiencies. The fact that the device carries static information independently of the area, audience, weather and other factors it may target, makes it less effective in terms of advertisement impact, precision-targeting and consequently return on marketing investment. Also, static information implies not only higher costs and operational burdens when they have to be changed. The devices have a single function, advertisement and marketing.

The present solution intended to innovatively overcome such issues.

### SUMMARY OF THE DISCLOSURE

It is therefore an object of the present disclosure an interactive targeted information system. Such system therefore overcomes the inefficiencies of the state-of-the-art systems by enabling stream information based on data, such as location, time of the day, weather, live events, product launches among others.

For that purpose, the system includes at least one display unit configured to display selected information, at least one data collection unit configured to collect sensory data related with the display unit's surrounding environment and at least one dynamic content selection unit for selecting information to be displayed based on at least the sensory data collected.

The dynamic information based on sensory data brings a higher level of efficiency to the marketing action and it is adaptive, less expensive and easy to change at any moment. The sensory data collected through the data collection units can include measuring and characterizing audience per location, mapping city areas and infrastructure deficiencies as well as registering weather considerations based on the day, time and location.

It is also an object of the present disclosure, a method for operating the interactive targeted information system now developed.

### DESCRIPTION OF FIGURES

Figure 1 - representation of the main units of the interactive targeted information system of the present disclosure. The reference signs represent:
   1 - data collection unit;
   2 - dynamic content selection unit;
   3 - display unit.
Figure 2 - an embodiment of the interactive targeted information system of the present disclosure, according to a stand-alone operation mode. The reference signs represent:
   1 - data collection unit;
   2 - dynamic content selection unit;
   3 - display unit;
   4 - protective box;
   5 - interactive targeted information device;
   7 - attaching means.
Figure 3 - representation of an embodiment of the interactive targeted information system of the present disclosure. The reference signs represent:
   1 - data collection unit;
   2 - dynamic content selection unit;
   3 - display unit;
   4 - protective box;
   5 - interactive targeted information device;
   7 - attaching means;
   8 - communication unit.
Figure 4 - illustration of the interactive targeted information system of the present disclosure comprised by a plurality of interactive targeted information devices (5) that are connected to each other by means of a bidirectional communication data link.
Figure 5 - representation of an embodiment of the interactive targeted information system of the present disclosure. The reference signs represent:
   1 - data collection unit;
   2 - dynamic content selection unit;
   3 - display unit;
   4 - protective box;
   5 - interactive targeted information device;
   7 - attaching means;
   8 - communication unit.
Figure 6 - illustration of an embodiment of the interactive targeted information system of the present disclosure where the dynamic content selection unit (2) is located in an external entity such as a web-based server. The system being comprised by a plurality of interactive targeted information devices (5) that are connected to each other and to the dynamic content selection unit (2) by means of a bidirectional communication data link.
Figure 7 - representation of an embodiment of the interactive targeted information system of the present disclosure. The reference signs represent:
   3 - display unit;
   4 - protective box;
   6 - vehicle.

### DETAILED DESCRIPTION

The present disclosure relates to an interactive targeted information system and respective method of operation.

In the context of the present disclosure the term information shall be interpreted as referring to any content capable of being displayed on an information display device. The content may be in video or audio-visual form. As an example, the information may relate to advertising or public warning contents.

In a preferred aspect of the Interactive targeted information system of the present disclosure, it is comprised by at least one display unit (3), by at least one data collection unit (1) and by at least one dynamic content selection unit (2).

More particularly, the display unit (3) is configured to display selected information. It may be any output device for presentation of information in audio-visual form. In an example, the display unit (3) may be an electronic visual display. In the context of the present disclosure, display unit shall also be interpreted as being provided with means for provision of sound, in such a way that information in an audio-visual format can be display by synchronizing video/image and sound data. A display unit (3) may comprise at least one 2D display module in order to display two-dimensional information. Alternatively, it may be formed by at least one 3D display or stereo display module, with the advantage of conveying depth perception to the audience. In a preferred aspect, a display unit (3) may be comprised by a combination of both 2D and 3D display modules. In a most preferred aspect of the system, the display module of a display unit (3) is a non-interactive display. In the context of the present disclosure, a non-interactive display allows the audience to observe selected information, being devoid of any input interface to control the operation the system or of the display module/display unit (3) itself.

Regarding the data collection unit (1), it is configured to collect sensory data related with the display unit's surrounding environment. Forthat purpose, the data collection unit (1) comprises all the necessary technical means adapted to execute a process of gathering sensory data on variables of interest. The referred technical means may relate to sensors in the form of a device, module, machine or subsystem, that are adapted to detect events or changes in an environment and to send that data to a computer processor in order to be processed. In this regard, the data collection unit (1) may be comprised by a GPS module adapted to retrieve display unit's geolocation data, or by a weather module adapted to collect weather data related to, for example, air temperature, humidity, atmospheric pressure, solar radiation, wind speed and direction. Additionally, the data collection unit (1) may also comprise a camara module adapted to capture sensory data of video and/or image data type. For that purpose, the camera module may comprise at least one high-definition omnidirectional camera or more preferably, it may comprise four high-definition omnidirectional cameras.

In the context of the present disclosure, the term sensory data shall be interpreted broadly, as including all the variables related with the display unit's surrounding environment such as, but not limited to location, time of day, weather conditions, as well as other types of data that may be captured by the cameras of the data collection unit (1). Particularly, the sensory data may relate to geolocation data, weather data, audio data, video data and image data.

The dynamic content selection unit (2) comprises a storage module for storing information to be displayed and a processing module configured to process sensory data collected by the data collection unit (1) and to select stored information to be displayed based on at least the processed sensory data. Additionally, the processing module of a dynamic content selection unit (2) is further configured to select stored information to be displayed based on time data. The processing module comprises processing means and operates on the storage module so that it is able to select and adapt the information to be displayed according to the processed sensory data. More particularly, the processing means of the processing module are configured to execute image and/or video processing algorithms adapted to extract content information related to at least audience characterization and urban environment and infrastructures. By audience characterization, it shall be understood as sensory data associated to physical characteristics defining traits or features of a viewer's body related to height, skin tone, body hair, hair colour and type, eye colour, body part's shapes, body deformations or other variations such as amputations, scars, burns and wounds. It may also relate to the clothing the viewer is wearing or any accessory that the viewer is carrying. For example, the extracted content information may, after being processed, reveal certain characteristics related to the clothing being worn by a viewer, which will influence the selection of the information to be presented, in particular allowing the selection of an advertising message directed to match the identified characteristic. Said characteristic may relate to any feature that may define the clothing being worn, such as its colour or type of garment. The term audience should not be limited to humans but should also include animals. Regarding the term urban environment and infrastructures, it concerns the collection of information related to the urban environment that surrounds the display unit and its infrastructure. This characterization is especially relevant for the selection of information related to public warnings, due to the occurrence of occasional situations such as road or building maintenance tasks, which are taking place in the surrounding area.

In another preferred aspect of the system, the display unit (3) comprises attaching means (7) adapted to attach the display unit (3) to a surface. In particular, the surface on which the display unit (3) is installed may be any support surface such as a ground/soil surface, a support structure of a billboard or the rooftop of a vehicle (6).

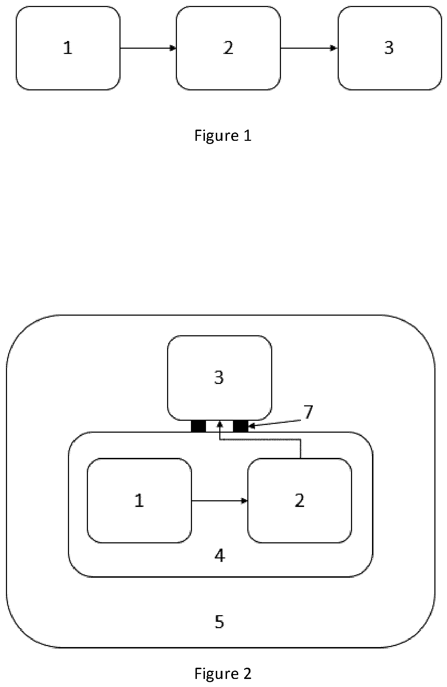

In another preferred aspect of the system, it further comprises a protective box (4) adapted to encapsulate at least a data collection unit (1) and a dynamic content selection unit (2) and to provide a surface support for attaching a display unit (3), forming an interactive targeted information device (5). In one aspect of system, the display unit (3) is retractable. This represents the simplest embodiment of the system, operating on a stand-alone model, as illustrated in figure 2.

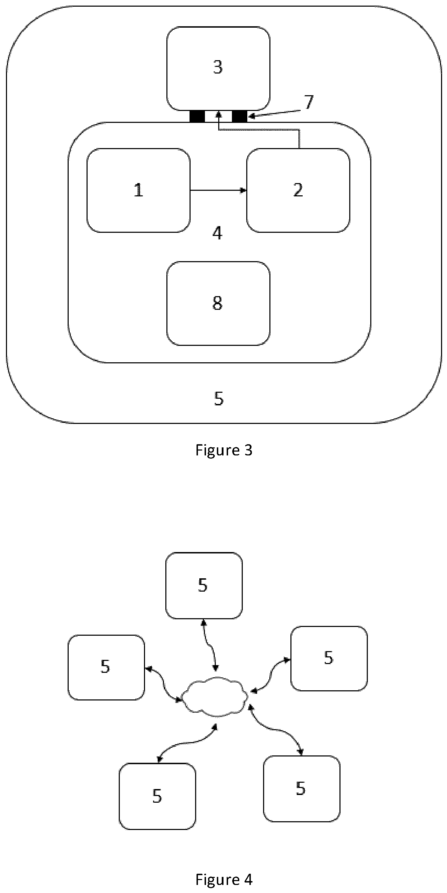

In another preferred aspect of the system, it is further comprised by at least one communication unit (8) that is configured to establish a bidirectional communication data link adapted to transmit sensory data collected by a data collection unit (1) and/or information stored in the storage module of a dynamic content selection unit (2), and to receive information to be stored in the storage unit of a dynamic content selection unit (2). Yet in another preferred aspect of the system, a protective box (4) is used to further encapsulate the communication unit (8), forming an interactive targeted information device (5). As illustrated in figure 4, the system may be comprised by a plurality of interactive targeted information devices (5) that are connected to each other via the bidirectional communication data link. As an example, all the interactive targeted information devices (5) are in wireless communication with each other via an IP-based wireless data network.

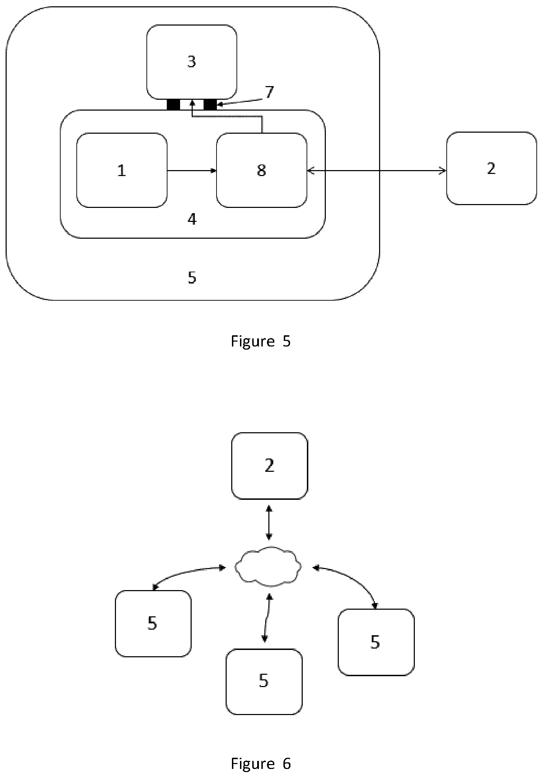

In another preferred aspect of the system, the protective box (4) is used to encapsulate a data collection unit (1) and a communication unit (8) and to provide a surface support for attaching a display unit (3), forming an interactive targeted information device (5). In one aspect of system, the display unit (3) is retractable. In this case, the dynamic content selection unit (2) is located in an external entity and the interactive targeted information device (5) is connected to the dynamic content selection unit (2) via the bidirectional communication data link. In a particular scenario as sketched in figure 6, the system is comprised by a plurality of interactive targeted information devices (5) which are in wireless communication with each other and/or with a dynamic content selection unit (2) via an IP-based wireless data network. The external entity may be a web-based server which comprises a web platform adapted to receive input parameters. Based on that, the processing module of the dynamic content selection unit (2) is further configured to select stored information and/or to adapt the content of stored information based on said input parameters. The input parameters may be configured by a user of the platform. In this way, the interaction with the content producers is enhanced, both in terms of selecting stored information to be presented and in terms of adapting this information prior to being presented.

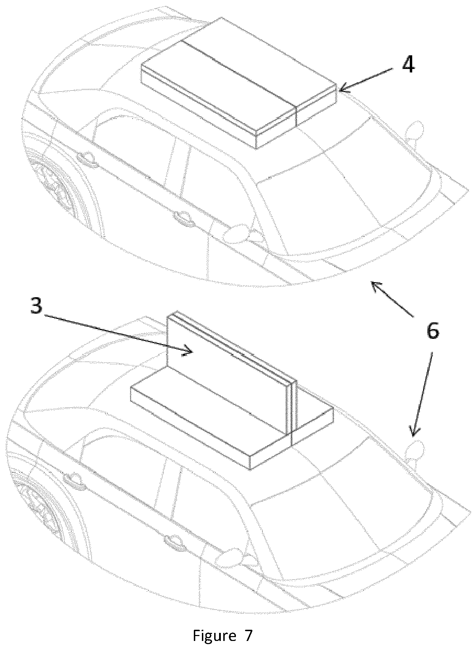

The protective box (4) may also comprise fixing means (9) adapted to fix the box (4) on the rooftop of a vehicle (6). Preferably, the fixing means (9) are vacuum suction cups. As illustrated in figure 7, in one embodiment of the system, the protective box integrates a retractable display (3). Said retractable display (3) has an open (top figure) and a closed position (bottom figure) depending on whether the display is in operation or not, respectively.

The present disclosure also relates to a method for operating the interactive targeted information system described.

In a preferred aspect of the method, it is comprised by the following steps:
- attaching a display unit (3) to a surface;
- collecting sensory data related with the display unit's surrounding environment, by a data collection unit (1);
- processing the collected sensory data and selecting information to be displayed on the display unit (3), by a processing module, based on at least the processed sensory data; the information being stored in a storage module;
- displaying the selected information on the display unit (3).

In another preferred aspect of the method, the it also includes the steps of:
- creating a data report based on the sensory data collected by the data collection unit (1); and
- adapting the content of a selected information or selecting the information to be displayed on the display unit (3), by the processing module, based on the sensory data collected by the data collection unit (1) or based on the data report created.

The report is used to gather all the sensory data related to the display unit's surrounding environment and the impact that the displayed information has on the audience. In this way it is possible to have a concrete idea of how a certain information was received by the audience as well as the dynamic factors that may influence its perception. Based on this information, the adaptation of the information to be presented or its selection is done carefully and considering all the dynamic factors.

In another preferred aspect of the method, it is further comprised by the following steps:
- capturing video and/or image data by a camera module;
- executing image and/or video processing algorithms by the processing unit to extract content information related to at least human characterization and urban environment and infrastructures;
- selecting information and/or adapting the content of a selected information to be displayed on the display unit (3) by the processing module, based on the content information extracted from the captured video and/or image data.

Finally, in another preferred aspect of the method, the selection of the information to be displayed on the display unit (3) is based on time data.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Interactive targeted information system comprising:
- At least one display unit configured to display selected information;
- At least one data collection unit configured to collect sensory data related with the display unit's surrounding environment;
- At least one dynamic content selection unit comprising a storage module for storing information and a processing module configured to process sensory data collected by at least one data collection unit and to select stored information to be displayed based on at least the processed sensory data;
wherein,
the display unit comprises attaching means adapted to attach the display unit to a surface;
and preferably, information relates to advertising information and/or marketing information.

2. System according to claim 1, wherein the sensory data relates to at least one of the following data: geolocation data, weather data, audio data, video data, image data; and
wherein,
the processing module of a dynamic content selection unit being configured to adapt the content of a selected information to be displayed based on the sensory data collected by a data collection unit.

3. System according to claim 2, wherein the data collection unit comprises a GPS module adapted to retrieve display unit's geolocation data, and
preferably, the data collection unit comprises a weather module adapted to collect weather data related to at least one of the following parameters: air temperature, humidity, atmospheric pressure, solar radiation, wind speed and direction.

4. System according to claims 2 or 3, wherein the data collection unit comprises a camara module adapted to capture sensory data of video and/or image data type; and wherein,
the processing module of a dynamic content selection unit being further configured:
- to execute image and/or video processing algorithms adapted to extract content information related to at least:
- audience characterization;
- urban environment and infrastructures;
and
- to select information and/or to adapt the content of a selected information to be displayed based on the content information extracted from the video and/or image data; and
preferably, the camera module comprises at least one high-definition omnidirectional camera; more preferably, the camera module comprises four high-definition omnidirectional cameras.

5. System according to any of the previous claims, wherein the processing module of a dynamic content selection unit is further configured to select stored information to be displayed based on time data.

6. System according to any of the previous claims wherein a display unit comprises at least one 2D and/or at least one 3D high-definition non-interactive display module.

7. System according to any of the previous claims, further comprising at least one communication unit configured to establish a bidirectional communication data link adapted:
- to transmit sensory data collected by a data collection unit and/or information stored in the storage module of a dynamic content selection unit; and
- to receive information to be stored in the storage unit of a dynamic content selection unit.

8. System according to claim 7, further comprising a protective box; the protective box being adapted to encapsulate at least a data collection unit and a communication unit and to provide a surface support for attaching a display unit, forming an interactive targeted information device;
wherein,
a dynamic content selection unit being located in an external entity; and
wherein,
the interactive targeted information device being connected to the dynamic content selection unit via the bidirectional communication data link;
and
preferably, the protective box comprises fixing means adapted to fix the box on the rooftop of a vehicle; even more preferably, the fixing means being vacuum suction cups.

9. System according to claim 8, comprising a plurality of interactive targeted information devices; the devices being connected to each other and or to the dynamic content selection unit via the bidirectional communication data link; and
wherein,
the external entity is a web-based server; the web-based server comprising a web platform adapted to receive input parameters; and
wherein,
the processing module of the dynamic content selection unit being further configured to select stored information and/or to adapt the content of stored information based on said input parameters.

10. System according to any of the previous claims 1 to 6, further comprising a protective box; the protective box being adapted to encapsulate at least a data collection unit and a dynamic content selection unit and to provide a surface support for attaching a display unit, forming an interactive targeted information device; preferably, the protective box comprises fixing means adapted to fix the box on the rooftop of a vehicle; the fixing means being vacuum suction cups.

11. System according to claims 7 and 10, wherein the protective box further encapsulates a communication unit, forming an interactive targeted information device; and
the system comprises a plurality of interactive targeted information devices; the devices being connected to each other via the bidirectional communication data link.

12. Method for operating the interactive targeted information system of claims 1 to 11; the method comprising the following steps:
- attaching a display unit to a surface;
- collecting sensory data related with the display unit's surrounding environment, by a data collection unit;
- processing the collected sensory data and selecting an information to be displayed on the display unit, by a processing module, based on at least the processed sensory data; the information being stored in a storage module;
- displaying the selected information on the display unit.

13. Method according to claim 12, wherein the sensory data relates to at least one of the following data: geolocation data, weather data, audio data, video data, image data;
the method further comprising the steps of:
- creating a data report based on the sensory data collected by the data collection unit;
- adapting the content of a selected information or selecting the information to be displayed on the display unit, by the processing module, based on the sensory data collected by the data collection unit or based on the data report created.

14. Method according to claim 13, further comprising the steps of:
- capturing video and/or image data by a camera module;
- executing image and/or video processing algorithms by the processing unit to extract content information related to at least human characterization and urban environment and infrastructures;
- selecting information and/or adapting the content of a selected information to be displayed on the display unit by the processing module, based on the content information extracted from the captured video and/or image data.

15. Method according to any of the previous claims 12 to 14, further comprising the step of selecting the information to be displayed on the display unit based on time data.
